# EUROPEAN PATENT APPLICATION

(11) **EP 4 624 754 A1**
(43) Date of publication of application: **01.10.2025**
(21) Application number: 24305473.1
(22) Date of filing: 28.03.2024
(51) Int. Cl.: F04D 13/06, F04D 29/42, F04D 29/62, H02K 5/22

(54) **CIRCULATION PUMP COMPRISING A PUMP HOUSING, A MOTOR HOUSING AND A TERMINAL BOX**

(71) Applicant: WILO SE, 44263 Dortmund (DE)
(72) Inventor: BOUET, Jérôme, 44263 Dortmund (DE); VALERIANI, Guillaume, 44263 Dortmund (DE)
(74) Representative: Schwöbel, Thilo K.

(57) **Abstract**

The invention relates to a circulation pump (1) comprising
-- a pump housing (10) with an impeller therein, the impeller being rotatable around a rotation axis (R) of the pump (1),
-- a motor housing (20) with an electrical motor therein, the electrical motor being coaxially connected to and driving the impeller,
-- a terminal box (30)
with electrical and/or electronical components therein for controlling the electrical motor, and
with a connecting element (321) to establish an electrical connection of the terminal box (30).

## Description

The present invention relates to a circulation pump comprising a pump housing, a motor housing and a terminal box.

### BACKGROUND OF THE INVENTION

There are many developments in the field of pumping, especially relating to pumping fluids like water and/or circulation pumps, and especially regarding the interworking of electrical engineering, mechanical engineering, and telecommunications, especially in view of more sustainability, ease of installation and/or reduction of maintenance efforts.

Circulation pumps are well known and are nowadays used, for instance, in heating systems of industrial applications as well as private households. For proper functionality, circulation pumps require one or many connecting elements, particularly for power supply and/or signal transmission.

Connecting elements are typically located outside the terminal box. The terminal box comprises electrical and/or electronical components for controlling an electrical motor that drives an impeller within the pump housing. The terminal box further comprises the connecting element to establish an electrical connection of the terminal box.

The position and orientation of such connecting elements can significantly impact the overall size of a circulation pump, especially when a counterpart of the connecting element is connected to the connecting element. In the state of the art, there are two primary methods or solutions for ensuring power supply to the circulation pump and/or signal exchange between the circulation pump and other devices. According to a first solution, the connecting elements are formed on the outside of the terminal box, providing rear or front access. This solution, while being highly functional and offering great accessibility, can increase the external size of the terminal box, especially when the counterpart of the respective connecting element is connected to the circulation pump. A second solution requires connecting the counterpart to the connecting element from a lateral side or surface of the circulation pump. The second solution allows for a smaller overall or external size of the pump when the one or many counterparts are plugged in or connected to the pump. However, the second solution also has its drawbacks, as it can increase the risk of moving the counterpart during operation of the pump. Furthermore, disconnecting the counterpart from the connecting element may be relatively difficult in the second solution, for instance due to spatial challenges in basements of private households.

### SUMMARY OF THE INVENTION

An object of the present invention is to provide a technically simple, effective and cost-effective solution for providing a circulation pump with a more compact overall size.

The object of the present invention is achieved by a circulation pump comprising
-- a pump housing with an impeller therein, the impeller being rotatable around a rotation axis of the pump,
-- a motor housing with an electrical motor therein, the electrical motor being coaxially connected to and driving the impeller,
-- a terminal box
   with electrical and/or electronical components therein for controlling the electrical motor, and
   with a connecting element to establish an electrical connection of the terminal box,
the electrical motor being arranged between the pump housing and the terminal box, wherein the terminal box comprises an outer surface as a front surface or lateral surface or back surface, the outer surface defining a general plane of extension either perpendicular to the rotation axis or parallel to the rotation axis,
wherein the terminal box comprises a recess with regard to the general plane of extension of the front surface or lateral surface or back surface, wherein the recess comprises an opening that is formed on the front surface or lateral surface or back surface of the terminal box,
wherein the connecting element is realized inside the recess and at a distance from the general plane of extension of the outer surface.

It is thereby advantageously possible according to the present invention to provide an optimized overall size of the circulation pump, particularly when the counterpart is plugged in or connected to the connecting element. In other words, maximum external dimensions of the circulation pump are advantageously reduced. Said advantage is achieved particularly due to the fact that the connecting element does not need to be formed on a back or rear surface of the pump, which reduces the maximum length of the pump, the length of the pump being configured parallel to the rotation axis of the pump. A circulation pump according to the invention further reduces the risk of moving the counterpart during operation, while ensuring that the counterpart can still be securely and easily connected to and/or disconnected from the pump.

Preferably, the terminal box comprises two connecting elements, for instance one connecting element for power supply and a further connecting element for signal exchange. Furthermore, a main body of the counterpart can be formed entirely or almost inside the recess. An unwanted unplugging or disconnection of the counterpart from the connecting element is thereby advantageously avoided or at least rendered more difficult. In other words, only a small portion of the counterpart can. Moreover, configuring a connecting element inside a recess can simplify connecting and/or disconnection of the counterpart since one or many internal surface sections of the recess can serve as guiding means for the counterpart. At the same time, due to a voluminous section of the counterpart being arranged inside the recess, the counterpart can be more securely remain plugged in or connected to the connecting element. In other words, a recess can increase mechanical stability of the counterpart, at least in a plugged in or connected state. The electrical connection within the meaning of the invention also includes an optical connection. In other words, the connection between the connecting element and the counterpart can be optical as well.

The outer surface within the meaning of the invention comprises at least one front surface, at least one lateral surface and at least one back surface. Furthermore, the outer surface within the meaning of the invention is particularly to be understood as a surface with components or extensions along all three spatial axes. The general plane of extension within the meaning of the invention, on the other hand, is to be understood as a two-dimensional or flat surface. The general plane of extension is particularly defined by the at least one front or lateral or back surface or a section of the at least one front or lateral or back surface. The front, lateral and back surface can be respectively flat or at least comprise respectively a flat section. In other words, the front, lateral and back surface can be respectively a multi-sectional surface, wherein the at least one section in or on any of the front, lateral and back surface can be also curved. According to the invention, the connecting element is spaced apart from the general plane of extension.

According to a preferred embodiment of the invention, the connecting element is formed such as to define a connecting direction or axis and such that, in order to establish the electrical connection, a counterpart of the connecting element is required to be moved along the connecting direction or axis.

In an advantageous embodiment of the invention, the connecting direction or axis and the rotation axis are formed parallel to each other. Alternatively, the connecting direction or axis can be perpendicular to the rotation axis. Furthermore, the rotation axis and the connecting direction or axis can have an intersection point. It is also conceivable that the connecting direction or axis is skew with regard to the rotation axis.

According to an advantageous embodiment of the invention, the recess comprises a posterior surface that is formed opposite the opening, wherein the connecting element is formed in or on the posterior surface, the posterior surface preferably having a smaller posterior area then an opening area of the opening. The opening can be flat. In other words, a fringe or border or contour of the opening can be arranged in a two-dimensional plane. The fringe or border or contour of the opening can be particularly arranged in a plane defined by the general plane of extension. In a particularly preferred embodiment, the posterior surface can be arranged parallel to the opening. In other words, the posterior surface can be formed perpendicular to the connecting direction or axis. The posterior area that comprises the connecting element can be smaller than the opening area. For instance, the posterior area can correspond to 90% or 80% or 70% or 60% or 50% or 40% or 30 % or 20% or 10% of the opening area of the opening. The connecting element, or at least a part thereof, can be formed as a protrusion with regard to the posterior area. The opening can be configured in a middle section of the front surface or lateral surface or back surface. Alternatively, the opening can be configured at an edge of the front surface or lateral surface or back surface which results in a fringe or border of the opening that is at least partially non-material or virtual. In other words, the border can be at least partially defined by a surface material of the terminal box and partially by the surrounding air.

In an advantageous embodiment of the invention, the recess comprises a second opening that is formed on a lateral surface or top surface of the terminal box and perpendicularly to the opening. The second opening can be flat. In other words, a fringe or border or contour of the second opening can be arranged in a two-dimensional plane, especially in a plane defined by the general plane of extension. The opening and the second opening can be configured in an overlapping fashion. For instance, the opening and the second opening can comprise a common area or fringe or border or contour. Preferably, the opening and the second opening are arranged at an edge of the terminal box.

According to an advantageous embodiment of the invention, the opening comprises an opening contour, wherein the opening contour comprises at least one straight section and at least one curved or angled section. It is thereby advantageously possible to form any opening contour that a specific application requires. For instance, a contour of a cross section of the counterpart, the cross section being parallel to the opening, can be the same contour as the opening contour, wherein the contour of the cross section of the counterpart is slightly larger than the opening counter. For instance, the contour of the cross section of the counterpart can be 20% or 30% larger. Analogously, a depth or length of the counterpart parallel to the connecting direction or axis can be, at least substantially, equal to a depth of the recess parallel to the connecting direction or axis. Analogously, a height of the counterpart can be, at least substantially, equal to a height of the opening.

Preferably, the recess comprises a multi-sectional interior surface, wherein an angle is formed between the front surface of the terminal box and at least one section of the multi-sectional interior surface. The section of the multi-sectional interior surface that forms an angle with regard to the front surface is preferably arranged or configured directly adjacent to the front surface. It is thereby advantageously possible to form an ergonomic access to the connecting element, since the connecting and disconnection becomes simplified by providing, at least on one side of the recess, sufficient space for a human hand to properly and stably grasp the counterpart. Preferably, on an opposite side of the recess and/or counterpart, there is no material or portion of the terminal box but only air, thereby providing an optimal configuration for properly grasping the counterpart from two sides.

According to a preferred embodiment of the invention, the recess comprises a middle surface that is formed parallel to the opening. The middle surface is arranged between the opening and a posterior surface of the recess. In other words, the posterior surface is farther spaced with regard to the opening than the middle surface. The middle surface advantageously serves as a mechanically supporting surface for the counterpart or at least a part of the counterpart. Due to the mechanical support by means of the middle surface, the counterpart can also be aligned in order to comprise an optimal orientation. Also, the middle surface can avoid excessive pushing of the counterpart towards the connecting element and therefore avoid overloading of the connecting element or at least minimize the forces that act upon the connecting element. In other words, the middle surface can also serve as protection means against excessive forces on the connecting element.

In an advantageous embodiment of the invention, the recess comprises a resting surface that is formed perpendicularly to the front surface. The resting surface can be formed as a step. Furthermore, the resting surface can be advantageously formed inside the recess. The counterpart or at least a portion of the counterpart can rest on the resting surface. It is thereby advantageously possible to provide a further means for aligning or optimally orienting the counterpart, especially when the counterpart is connected to the connecting element.

According to an advantageous embodiment of the invention, the circulation pump comprises a means for guiding a cable of the counterpart and/or a cable of a further counterpart, the means being preferably formed as a groove, wherein, preferably, the means comprises an element for fixation. The circulation pump can comprise a further connecting element. The connecting element and the further connecting element can be arranged in a coplanar manner. Furthermore, the connecting element and the further connecting element can be configured such that the counterpart and a further counterpart are required to be moved parallel to each other, respectively along a connecting direction or axis and a further connecting direction or axis. The means for guiding the cable of the connecting element and/or the cable of the further connecting element can be particularly formed in or on or at the terminal box, e.g. on the front surface and/or the lateral surface and/or the back surface or a combination thereof. Preferably, a pair of means, especially a pair of grooves, is formed on two opposing lateral surfaces of the terminal box. Additionally, the one groove or the two grooves can be linear. Every single groove can be designed or configured as one-piece. For instance, the casing or a base body of the outer surface or lateral surface or front surface or back surface of the terminal box can be made by casting, wherein the cured or solidified casing or the base body of outer surface or lateral surface or front surface or back surface of the terminal box comprises the one groove or the two grooves. Preferably, the grooves are formed perpendicularly to the rotation axis of the pump. Moreover, the element for fixation can be a - particularly plastic - latching, folding or snapping element. Alternatively, the element for fixation is a cross sectional narrowing or constriction of the means for guiding. It is advantageously possible that the one or two grooves respectively comprise a cross sectional narrowing or constriction, the cross sectional narrowing or constriction preferably having a slightly smaller dimension, e.g. parallel to the rotation axis, than a diameter of a cable that can be pushed into the groove. It is thereby advantageously possible to secure the cable and reduce the risk of an unwanted disconnection of any cable.

### BRIEF DESCRIPTION OF THE DRAWING

Figure 1a schematically and exemplarily illustrates, in a first perspective view, a first embodiment of an inventive circulation pump with a connecting element and a further connecting element, wherein a counterpart of the connecting element and a further counterpart of the further connecting element are unplugged or respectively disconnected from the connecting element and the further connecting element.
Figure 1b schematically illustrates the first embodiment of the circulation pump shown in Figure 1a, wherein the counterpart of the connecting element and the further counterpart of the further connecting element are respectively connected to the connecting element and the further connecting element.
Figure 2a schematically illustrates the first embodiment of the inventive circulation pump shown in figure 1a in a second perspective view, wherein the counterpart of the connecting element and the further counterpart of the further connecting element are respectively disconnected from the connecting element and the further connecting element.
Figure 2b schematically illustrates the first embodiment of the inventive circulation pump shown in figure 2a in the second perspective view, wherein the counterpart of the connecting element and the further counterpart of the further connecting element are respectively connected to the connecting element and the further connecting element.
Figure 3a schematically illustrates a second embodiment of an inventive circulation pump, in a third perspective view, wherein the counterpart is disconnected from the connecting element.
Figure 3b schematically illustrates the second embodiment of the inventive circulation pump shown in figure 3a, in the third perspective view, wherein the counterpart is connected to the connecting element.
Figure 4a schematically and exemplarily illustrates a third embodiment of the inventive circulation pump, in a fourth perspective view, wherein the counterpart is disconnected from the connecting element, wherein the terminal box comprises a means for guiding a cable of the counterpart.
Figure 4b schematically illustrates the third embodiment of the inventive circulation pump, in the fourth perspective view, wherein the counterpart is connected to the connecting element.

### DETAILED DESCRIPTION

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

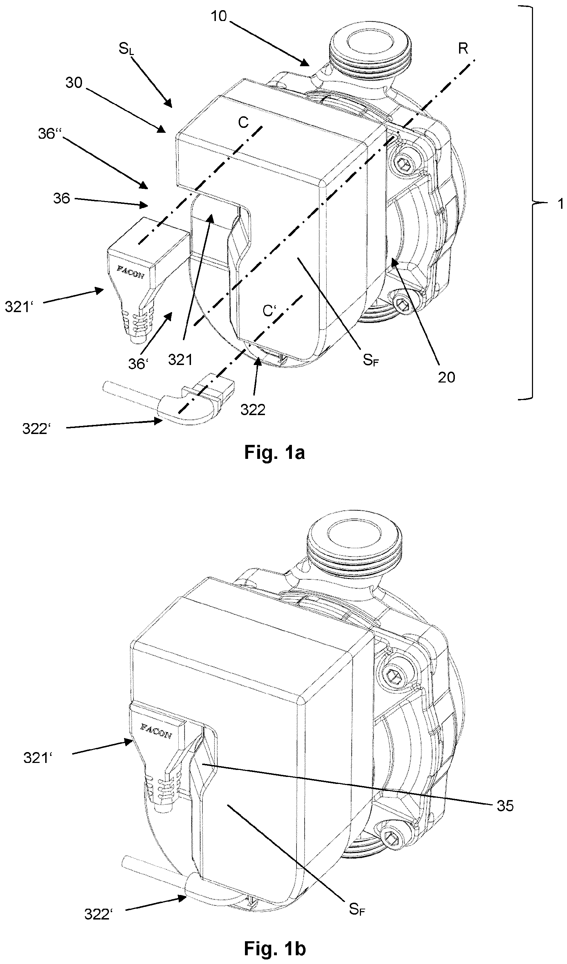

Figure 1a schematically and exemplarily illustrates, in a first perspective view, a first embodiment of an inventive circulation pump 1 with a connecting element 321 and a further connecting element 322, wherein a counterpart 321' of the connecting element 321 and a further counterpart 322' of the further connecting element 322 are unplugged or respectively disconnected from the connecting element 321 and the further connecting element 322.

The circulation pump 1 comprises a pump housing 10 with an impeller therein, the impeller being rotatable around a rotation axis R of the pump 1. The circulation pump 1 further comprises a motor housing 20 with an electrical motor therein, the electrical motor being coaxially connected to and driving the impeller. The circulation pump 1 further comprises a terminal box 30 with electrical and/or electronical components therein for controlling the electrical motor. The terminal box 30 comprises the connecting element 321 to establish an electrical connection of the terminal box 30.

The electrical motor and/or the motor housing 20 is arranged between the pump housing 10 and the terminal box 30. The terminal box 30 comprises an outer surface as a front surface S_{F}, the outer surface defining a general plane of extension perpendicular to the rotation axis R.

The terminal box 30 comprises a recess 36 with regard to the general plane of extension of the front surface S_{F}. The recess 36 comprises an opening 36' that is formed on the front surface S_{F}. The recess 36 further comprises a second opening 36" that is formed on a lateral surface S_{L} of the terminal box 30 and perpendicularly to the opening 36'.

The connecting element 321 is formed such as to define a connecting direction or axis C and such that, in order to establish the electrical connection, the counterpart 321' of the connecting element 321 is required to be moved along the connecting direction or axis C. Analogously, in order to establish a further electrical connection, the further counterpart 322' of the further connecting element 322 is required to be moved along a further connecting direction or axis C'. Moreover, the connecting direction or axis C, the further connecting direction or axis C' and the rotation axis R are formed parallel to each other.

As can be taken from figure 1a - and also from following figures such as figure 1b, figure 2b, figure 3b, figure 4b - it is advantageously possible according to the present invention to provide an optimized overall size of the circulation pump 1, particularly when the counterpart 321' and the further counterpart 322' are plugged in or respectively connected to the connecting element 321 and the further connecting element 322. In other words, maximum external dimensions of the circulation pump 1 are advantageously reduced, especially an overall length of the pump 1, the length being defined parallel to the rotation axis R. Said advantage is achieved particularly due to the fact that the counterpart 321' and the further counterpart 322' don't protrude or only slightly protrude with regard to the front surface S_{F}. A circulation pump 1 according to the invention further reduces the risk of moving the counterpart 321' and the further counterpart 322' during operation since a respective volume of both, the counterpart 321' and the further counterpart 322', remain - while in operation - at least substantially inside the recess 36. Therefore, moving the counterpart 321' and the further counterpart 322' is made difficult due to the inventive configuration and/or design of the circulation pump 1.

Figure 1b schematically illustrates the first embodiment of the circulation pump 1 shown in Figure 1a, wherein the counterpart 321' of the connecting element 321 and the further counterpart 322' of the further connecting element 322 are respectively connected to the connecting element 321 and the further connecting element 322.

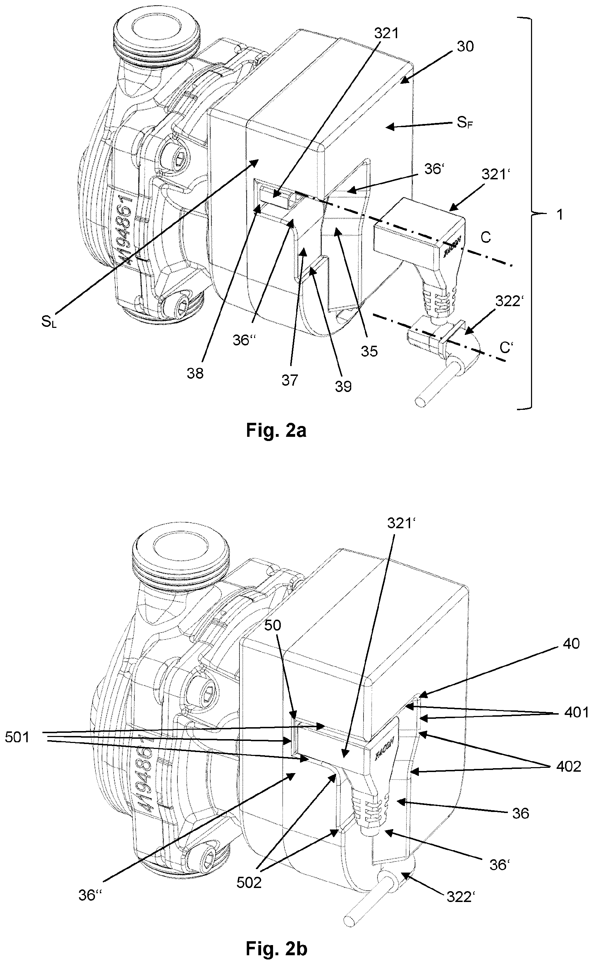

Figure 2a schematically illustrates the first embodiment of the inventive circulation pump 1 shown in figure 1a in a second perspective view, wherein the counterpart 321' of the connecting element 321 and the further counterpart 322' of the further connecting element 322 are respectively disconnected from the connecting element 321 and the further connecting element 322.

In addition to the opening 36', the recess 36 further comprises a second opening 36" that is formed on the lateral surface S_{L} of the terminal box 30. The second opening 36" is perpendicular to the opening 36'. Furthermore, the opening 36' and the second opening 36" are arranged at an edge of the terminal box 30.

The recess 36 further comprises a posterior surface 38 that is formed opposite the opening 36'. The connecting element 321 is formed in or on the posterior surface 38. The posterior surface 38 has a smaller posterior area then an opening area of the opening 36'. Such a design allows for simple connection and disconnection of the counterpart 321' without claiming unnecessary volume of the terminal box 30. In other words, the recess doe not take up too much space and/or area so that sufficient room remains inside the terminal box 30 for electric and electronic components.

The recess 36 comprises a multi-sectional interior surface 35, wherein an angle is formed between the front surface S_{F} of the terminal box 30 and at least one section of the multi-sectional interior surface 35. Said angle is easilier recognizable in figure 1a and figure 1b. The recess 36 further comprises a middle surface 37 that is formed parallel to the opening 36'. The middle surface 37 is arranged between the opening 36' and the posterior surface 38. In other words, the posterior surface 38 is farther spaced with regard to the opening 36' than the middle surface 37. The middle surface 37 advantageously serves as a mechanically supporting surface for the counterpart 321' or at least a part of the counterpart 321'. Due to the mechanical support by means of the middle surface 37, the counterpart 321' can also be aligned in order to comprise an optimal orientation. Also, the middle surface 37 can avoid excessive pushing of the counterpart 321' towards the connecting element 321 and therefore avoid overloading of the connecting element 321 or at least minimize the forces that act upon the connecting element 321. In other words, the middle surface 37 can also serve as protection means against excessive forces on the connecting element 321.

The recess 36 further comprises a resting surface 39 that is formed perpendicularly to the front surface S_{F} and the lateral surface S_{L}. The resting surface 39 is formed as a step. Furthermore, the resting surface 39 is advantageously formed inside the recess 36. The counterpart 321' or at least a portion of the counterpart 321' can rest on the resting surface 39. It is thereby advantageously possible to provide a further means for aligning or optimally orienting the counterpart 321', especially when the counterpart 321' is connected to the connecting element 321.

Figure 2b schematically illustrates the first embodiment of the inventive circulation pump 1 shown in figure 2a in the second perspective view, wherein the counterpart 321' of the connecting element 321 and the further counterpart 322' of the further connecting element 322 are respectively connected to the connecting element 321 and the further connecting element 322. The opening 36' comprises an opening contour 40. The opening contour 40 comprises straight sections 401 two of which are explicitly shown in figure 2b. Furthermore, the opening contour 40 comprises curved sections 402 two of which are explicitly shown in figure 2b. Likewise, the second opening 36" comprises a second opening contour 50. The second opening contour 50 comprises straight sections 501 three of which are explicitly shown in figure 2b. Furthermore, the second opening contour 50 comprises curved sections 502 two of which are also explicitly shown in figure 2b. The opening 36' and the second opening 36" and along with them the opening contour 40 and the second opening contour 50 are advantageously formed as they are adjusted to the counterpart 321' and its shape. As a result, the counterpart 321' and its volume entirely fits into the recess 36

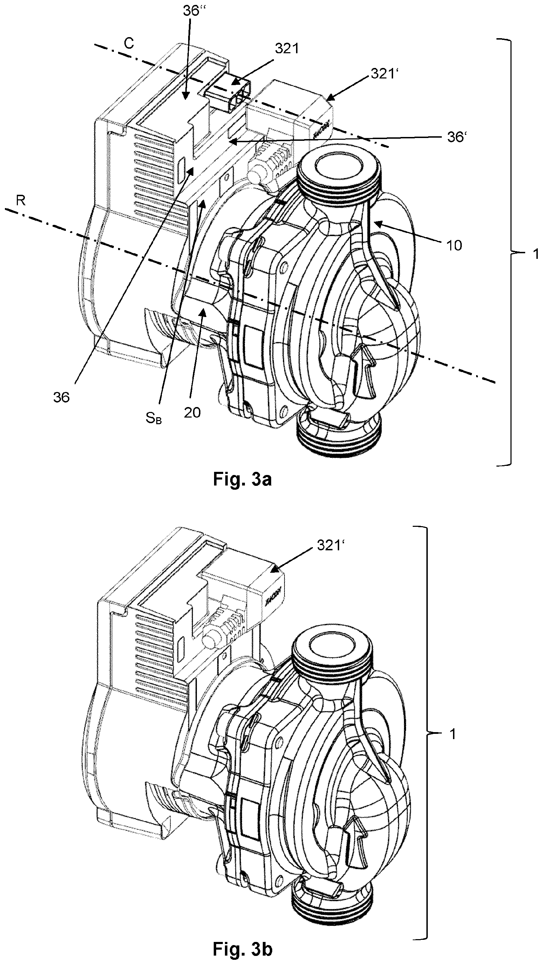

Figure 3a schematically illustrates a second embodiment of an inventive circulation pump 1, in a third perspective view, wherein the counterpart 321' is disconnected from the connecting element 321. In the second embodiment of the circulation pump 1, the back surface S_{B} defines the general plane of extension that is perpendicular to the rotation axis R. The terminal box 30 comprises a recess 36 with regard to the general plane of extension of the back surface S_{B}. The recess 36 comprises an opening 36' that is formed on the back surface S_{B} of the terminal box 30. The recess 36 further comprises a second opening 36". The connecting element 321 is realized inside the recess 36 and at a distance from the general plane of extension.

According to the second embodiment of the circulation pump 1 illustrated in figure 3a, the connecting element 321 protrudes towards the pump housing 10 and the motor housing 20. The counterpart 321' of the connecting element 321 therefore is required to be moved along the connecting direction or axis C, wherein a direction of motion is in the opposite direction compared to the first embodiment shown in the figures 1a to 2b, in figure 3a from a right hand side to a left hand side. The design and/or configuration of the second embodiment of the pump 1 is such that the counterpart 321' does not take up additional space and hence does not increase the overall size of the pump 1. Furthermore, during operation of the pump 1, an unwanted disconnection of the counterpart 321' is - due to the position of the counterpart 321' - at least rendered difficult.

Figure 3b schematically illustrates the second embodiment of the inventive circulation pump 1 shown in figure 3a, in the third perspective view, wherein the counterpart 321' is connected to the connecting element 321.

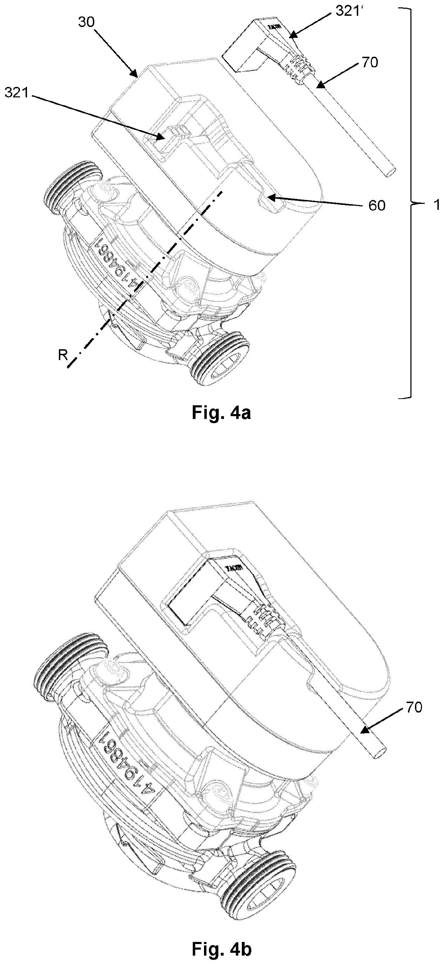

Figure 4a schematically and exemplarily illustrates a third embodiment of the inventive circulation pump 1, in a fourth perspective view, wherein the counterpart 321' is disconnected from the connecting element 321, wherein the terminal box 30 comprises a means 60 for guiding a cable 70 of the counterpart 321'. The means 60 for guiding a cable 70 of the counterpart 321' is configured as a linear groove that is perpendicular to the rotation axis R of the pump 1.

Figure 4b schematically illustrates the third embodiment of the inventive circulation pump 1, in the fourth perspective view, wherein the counterpart 321' is connected to the connecting element 321. Furthermore, the cable 70 is positioned within the groove 60.

### Reference signs

- 1: Circulation pump

- 10: Pump housing
- 20: Motor housing
- 30: Terminal box
- 35: Multi-sectional interior surface
- 36: Recess
- 36': Opening
- 36": Second opening
- 37: Middle surface
- 38: Posterior surface
- 39: Resting surface
- 40: Opening contour
- 50: Second opening contour
- 60: Means for guiding a cable
- 70: Cable

- 321: Connecting element
- 321': Counterpart
- 321": Connecting portion
- 322: Further connecting element
- 322': Further counterpart
- 401: Straight section of the opening contour
- 402: Curved section of the opening contour
- 501: Straight section of the second opening contour
- 502: Curved section of the second opening contour

- C: Connecting direction or axis
- C': Further connecting direction or axis
- R: Rotation axis
- S_{B}: Back surface
- S_{F}: Front surface
- S_{L}: Lateral surface

## Claims

1. Circulation pump (1) comprising
-- a pump housing (10) with an impeller therein, the impeller being rotatable around a rotation axis (R) of the pump (1),
-- a motor housing (20) with an electrical motor therein, the electrical motor being coaxially connected to and driving the impeller,
-- a terminal box (30)
with electrical and/or electronical components therein for controlling the electrical motor, and
with a connecting element (321) to establish an electrical connection of the terminal box (30),
the electrical motor being arranged between the pump housing (10) and the terminal box (30), wherein the terminal box (30) comprises an outer surface as a front surface (S_{F}) or lateral surface (S_{L}) or back surface (S_{B}), the outer surface defining a general plane of extension either perpendicular to the rotation axis (R) or parallel to the rotation axis (R),
**characterized in that** the terminal box (30) comprises a recess (36) with regard to the general plane of extension of the front surface (S_{F}) or lateral surface (S_{L}) or back surface (S_{B}), wherein the recess (36) comprises an opening (36') that is formed on the front surface (S_{F}) or lateral surface (S_{L}) or back surface (S_{B}) of the terminal box (30), wherein the connecting element (321) is realized inside the recess (36) and at a distance from the general plane of extension of the outer surface.

2. Circulation pump (1) according to claim 1, **characterized in that** the connecting element (321) is formed such as to define a connecting direction or axis (C) and such that, in order to establish the electrical connection, a counterpart (321') of the connecting element (321) is required to be moved along the connecting direction or axis (C).

3. Circulation pump (1) according to claim 1 or 2, **characterized in that** the connecting direction or axis (C) and the rotation axis (R) are formed parallel to each other.

4. Circulation pump (1) according to any of the preceding claims, **characterized in that** the recess (36) comprises a posterior surface (38) that is formed opposite the opening (36'), wherein the connecting element (321) is formed in or on the posterior surface (38), the posterior surface (38) preferably having a smaller posterior area then an opening area of the opening (36').

5. Circulation pump (1) according to any of the preceding claims, **characterized in that** the recess (36) comprises a second opening (36") that is formed on a lateral surface (S_{L}) or top surface (S_{F}) of the terminal box (30) and perpendicularly to the opening (36').

6. Circulation pump (1) according to any of the preceding claims, **characterized in that** the opening (36') comprises an opening contour (), wherein the opening contour comprises at least one straight section and at least one curved or angled section.

7. Circulation pump (1) according to any of the preceding claims, **characterized in that** the recess (36) comprises a multi-sectional interior surface (35), wherein an angle is formed between the front surface (S_{F}) of the terminal box (30) and at least one section of the multi-sectional interior surface (35).

8. Circulation pump (1) according to any of the preceding claims, **characterized in that** the recess (36) comprises a middle surface (37) that is formed parallel to the opening (36').

9. Circulation pump (1) according to any of the preceding claims, **characterized in that** the recess (36) comprises a resting surface (39) that is formed perpendicularly to the front surface (S_{F}).

10. Circulation pump (1) according to any of the preceding claims, **characterized by** a means (60) for guiding a cable (70) of the counterpart (321') and/or a cable (70) of a further counterpart (322'), the means (60) being preferably formed as a groove, wherein, preferably, the means (60) comprises an element (80) for fixation.

## Amended claims

### Amended claims in accordance with Rule 137(2) EPC.

1. Circulation pump (1) comprising
-- a pump housing (10) with an impeller therein, the impeller being rotatable around a rotation axis (R) of the pump (1),
-- a motor housing (20) with an electrical motor therein, the electrical motor being coaxially connected to and driving the impeller,
-- a terminal box (30)
with electrical and/or electronical components therein for controlling the electrical motor, and
with a connecting element (321) to establish an electrical connection of the terminal box (30),
the electrical motor being arranged between the pump housing (10) and the terminal box (30), wherein the terminal box (30) comprises an outer surface as a front surface (S_{F}) or lateral surface (S_{L}) or back surface (S_{B}), the outer surface defining a general plane of extension either perpendicular to the rotation axis (R) or parallel to the rotation axis (R),
**characterized in that** the terminal box (30) comprises a recess (36) with regard to the general plane of extension of the front surface (S_{F}) or lateral surface (S_{L}), wherein the recess (36) comprises an opening (36') that is formed on the front surface (S_{F}) or lateral surface (S_{L}) or back surface (S_{B}) of the terminal box (30), wherein the connecting element (321) is realized inside the recess (36) and at a distance from the general plane of extension of the outer surface,
wherein the recess (36) comprises a posterior surface (38) that is formed opposite the opening (36'), wherein the connecting element (321) is formed in or on the posterior surface (38), the posterior surface (38) having a smaller posterior area then an opening area of the opening (36').

2. Circulation pump (1) according to claim 1, **characterized in that** the connecting element (321) is formed such as to define a connecting direction or axis (C) and such that, in order to establish the electrical connection, a counterpart (321') of the connecting element (321) is required to be moved along the connecting direction or axis (C).

3. Circulation pump (1) according to claim 1 or 2, **characterized in that** the connecting direction or axis (C) and the rotation axis (R) are formed parallel to each other.

4. Circulation pump (1) according to any of the preceding claims, **characterized in that** the recess (36) comprises a second opening (36") that is formed on a lateral surface (S_{L}) or top surface (S_{F}) of the terminal box (30) and perpendicularly to the opening (36').

5. Circulation pump (1) according to any of the preceding claims, **characterized in that** the opening (36') comprises an opening contour (), wherein the opening contour comprises at least one straight section and at least one curved or angled section.

6. Circulation pump (1) according to any of the preceding claims, **characterized in that** the recess (36) comprises a multi-sectional interior surface (35), wherein an angle is formed between the front surface (S_{F}) of the terminal box (30) and at least one section of the multi-sectional interior surface (35).

7. Circulation pump (1) according to any of the preceding claims, **characterized in that** the recess (36) comprises a middle surface (37) that is formed parallel to the opening (36'), wherein the middle surface (37) is especially arranged between the opening (36') and a posterior surface (38) of the recess.

8. Circulation pump (1) according to any of the preceding claims, **characterized in that** the recess (36) comprises a resting surface (39) that is formed perpendicularly to the front surface (S_{F}), wherein especially the counterpart (321') or at least a portion of the counterpart (321') can rest on the resting surface (39).

9. Circulation pump (1) according to any of the preceding claims, **characterized by** a means (60) for guiding a cable (70) of the counterpart (321') and/or a cable (70) of a further counterpart (322'), the means (60) being preferably formed as a groove, wherein, preferably, the means (60) comprises an element (80) for fixation.
1. Circulation pump (1) comprising
-- a pump housing (10) with an impeller therein, the impeller being rotatable around a rotation axis (R) of the pump (1),
-- a motor housing (20) with an electrical motor therein, the electrical motor being coaxially connected to and driving the impeller,
-- a terminal box (30)
with electrical and/or electronical components therein for controlling the electrical motor, and
with a connecting element (321) to establish an electrical connection of the terminal box (30),
the electrical motor being arranged between the pump housing (10) and the terminal box (30), wherein the terminal box (30) comprises an outer surface as a front surface (S_{F}) or lateral surface (S_{L}) or back surface (S_{B}), the outer surface defining a general plane of extension either perpendicular to the rotation axis (R) or parallel to the rotation axis (R),
**characterized in that** the terminal box (30) comprises a recess (36) with regard to the general plane of extension of the front surface (S_{F}) or lateral surface (S_{L}), wherein the recess (36) comprises an opening (36') that is formed on the front surface (S_{F}) or lateral surface (S_{L}) or back surface (S_{B}) of the terminal box (30), wherein the connecting element (321) is realized inside the recess (36) and at a distance from the general plane of extension of the outer surface,
wherein the recess (36) comprises a posterior surface (38) that is formed opposite the opening (36'), wherein the connecting element (321) is formed in or on the posterior surface (38), the posterior surface (38) having a smaller posterior area then an opening area of the opening (36');
wherein the recess (36) comprises a second opening (36") that is formed on a lateral surface (S_{L}) or top surface (S_{F}) of the terminal box (30) and perpendicularly to the opening (36').
2. Circulation pump (1) according to claim 1, **characterized in that** the connecting element (321) is formed such as to define a connecting direction or axis (C) and such that, in order to establish the electrical connection, a counterpart (321') of the connecting element (321) is required to be moved along the connecting direction or axis (C).
3. Circulation pump (1) according to claim 1 or 2, **characterized in that** the connecting direction or axis (C) and the rotation axis (R) are formed parallel to each other.
4. Circulation pump (1) according to any of the preceding claims, **characterized in that** the opening (36') comprises an opening contour (), wherein the opening contour comprises at least one straight section and at least one curved or angled section.
5. Circulation pump (1) according to any of the preceding claims, **characterized in that** the recess (36) comprises a multi-sectional interior surface (35), wherein an angle is formed between the front surface (S_{F}) of the terminal box (30) and at least one section of the multi-sectional interior surface (35).
6. Circulation pump (1) according to any of the preceding claims, **characterized in that** the recess (36) comprises a middle surface (37) that is formed parallel to the opening (36'), wherein the middle surface (37) is especially arranged between the opening (36') and a posterior surface (38) of the recess.
7. Circulation pump (1) according to any of the preceding claims, **characterized in that** the recess (36) comprises a resting surface (39) that is formed perpendicularly to the front surface (S_{F}), wherein especially the counterpart (321') or at least a portion of the counterpart (321') can rest on the resting surface (39).
8. Circulation pump (1) according to any of the preceding claims, **characterized by** a means (60) for guiding a cable (70) of the counterpart (321') and/or a cable (70) of a further counterpart (322'), the means (60) being preferably formed as a groove, wherein, preferably, the means (60) comprises an element (80) for fixation.
